# EUROPEAN PATENT SPECIFICATION

(11) **EP 1 577 068 B1**
(45) Date of publication and mention of the grant of the patent: **06.06.2007**
(21) Application number: 04006471.9
(22) Date of filing: 18.03.2004
(51) Int. Cl.: B27B 21/08, B23D 59/00, B23Q 17/24

(54) **Handsaw having sawing guide function**
Handsäge mit Führungsfunktion
Scie à main avec fonction de guidage

(43) Date of publication of application: 21.09.2005
(73) Proprietor: Hsu, Hung-Chi, Tainan (TW); Hsu, Hung-Lung, Tainan (TW)
(72) Inventor: Hsu, Hung-Chi, Tainan (TW); Hsu, Hung-Lung, Tainan (TW)
(74) Representative: Panten, Kirsten

(56) References cited:
- EP-A- 0 504 745
- GB-A- 625 161
- US-A- 4 833 782

## Description

The present invention relates to a handsaw, and more particularly to a handsaw having a sawing guide function.

A conventional handsaw comprises a handle, and a blade mounted on the handle. In practice, a worker can drive the blade to move in the direction indicated by a sawing line drawn on a workpiece so as to cut the workpiece according to the sawing line of the workpiece. However, the blade is easily vibrated or inclined during the sawing process due to an unevenly distributed force applied by the worker, so that the blade is easily deflected from the sawing line of the workpiece, thereby greatly decreasing precision of sawing the workpiece.

EP 0 504 745 A1 discloses a handsaw comprising a handle, a blade mounted on the handle, and a light emitting member mounted on the handle to produce a longitudinal light beam aligning with a cutting edge of the blade, the longitudinal light beam of the light emitting member projecting onto a surface of a workpiece to align with a sawing line of the workpiece, so that the sawing line of the workpiece and the longitudinal light beam of the light emitting member are directed in the same direction

The objective of the present invention is to provide a handsaw, wherein the transverse light beam of the light emitting member is aligning with the transverse edge of the workpiece constantly, so that the blade is kept at a vertical state relative to the workpiece, thereby enhancing precision of sawing the workpiece.

The objective of the present invention is solved with a handsaw with the features of claim 1 producing a longitudinal light beam aligning with a lower edge of the blade and extending outward from the lower edge of the blade.

Further benefits and advantages of the present invention will become apparent after a careful reading of the detailed description with appropriate reference to the accompanying drawings, wherein the embodiments according to Fig.1 to Fig. 4 do not show the invention.

In the drawings:
Fig. 1 is a perspective view of a handsaw;
Fig. 2 is a plan view of the handsaw as shown in Fig. 1;
Fig. 3 is a perspective view of another handsaw;
Fig. 4 is a perspective view of still another handsaw; and
Fig. 5 is a perspective view of a handsaw in accordance with an embodiment of the present invention.

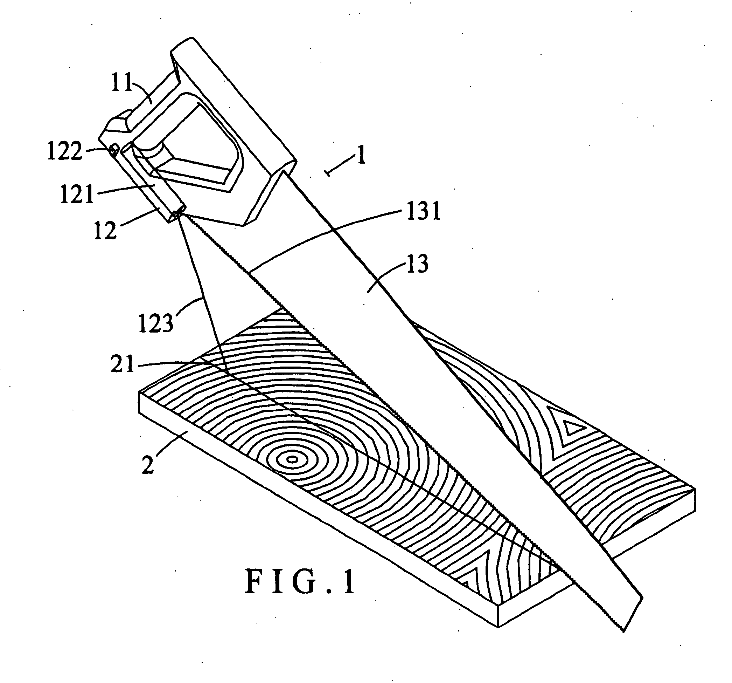

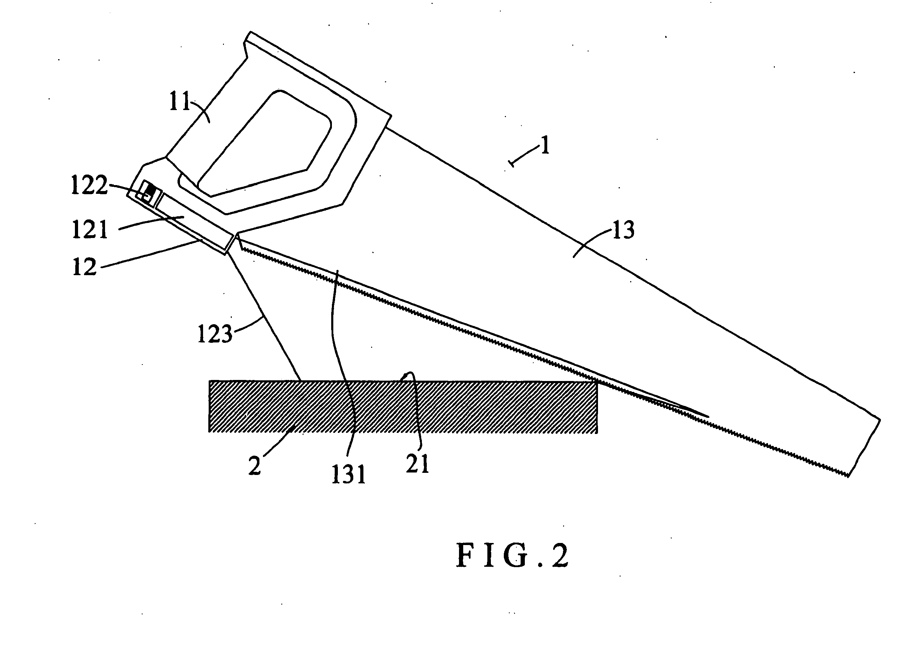

Referring to the drawings and initially to Figs. 1 and 2, a handsaw 1 comprises a handle 11, a blade 13 mounted on the handle 11, a chamber 12 mounted on a side of the handle 11, a light emitting member 121 mounted in the chamber 12 to produce a longitudinal light beam 123 aligning with a lower edge 131 of the blade 13 and extending outward from the lower edge 131 of the blade 13, and a switch 122 mounted on a side of the chamber 12 and connected to the light emitting member 121 to control operation of the light emitting member 121.

Preferably, the longitudinal light beam 123 of the light emitting member 121 is a laser light and has a planar shape. In addition, the light emitting member 121 has an inside provided with a battery and a circuit board.

In practice, the switch 122 is operated to turn on the light emitting member 121, so that the longitudinal light beam 123 of the light emitting member 121 is projected onto a surface of a workpiece 2 to align with a sawing line 21 of the workpiece 2. Thus, the sawing line 21 of the workpiece 2 and the longitudinal light beam 123 of the light emitting member 121 are directed in the same direction, so that a worker can drive the blade 13 to move in the common direction indicated by the sawing line 21 of the workpiece 2 and the longitudinal light beam 123 of the light emitting member 121 so as to cut the workpiece 2 exactly, thereby facilitating the worker sawing the workpiece 2, and thereby enhancing precision of sawing the workpiece 2.

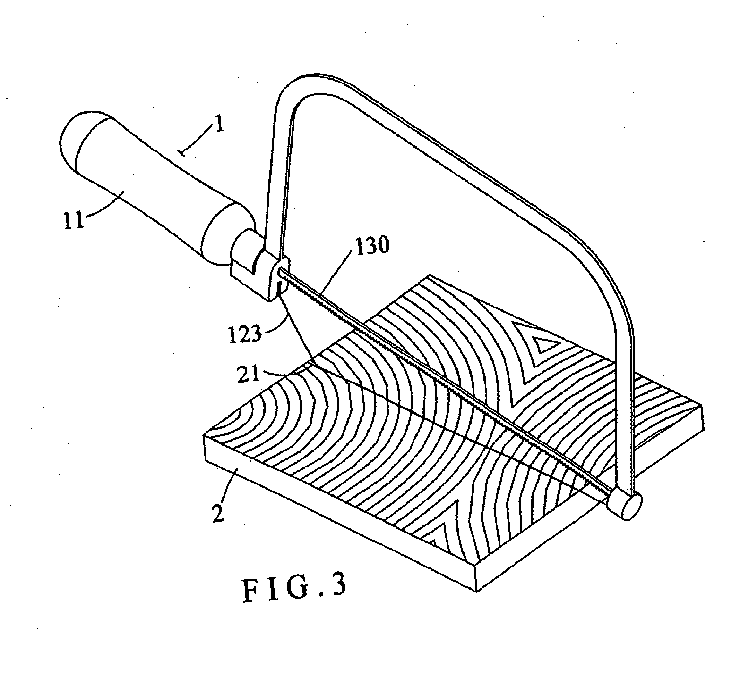

Referring to Fig. 3, the handsaw 1 comprises a blade 130 of a different shape.

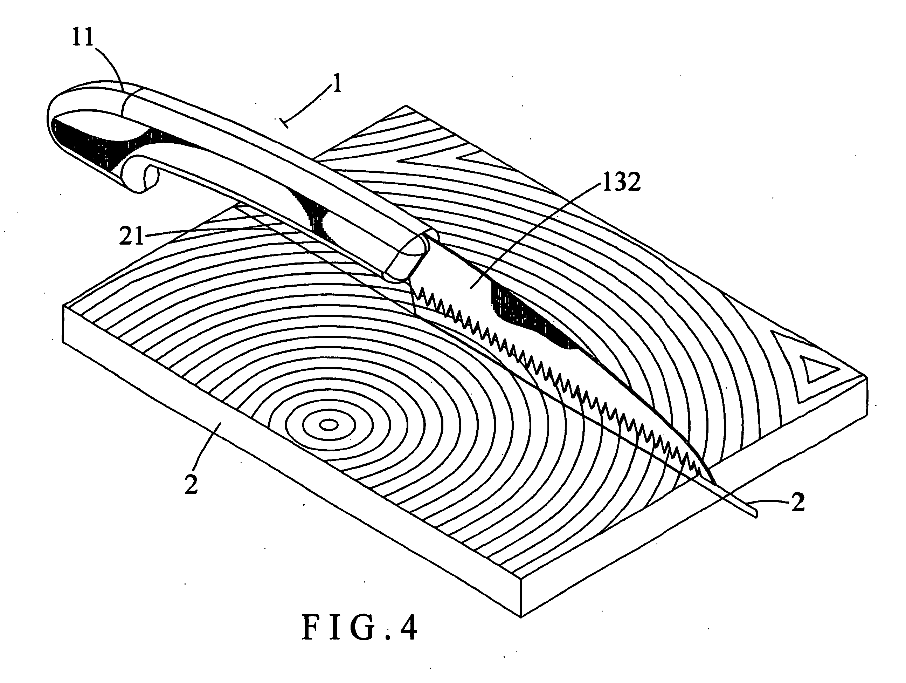

Referring to Fig. 4, the handsaw 1 comprises a blade 132 of a different shape.

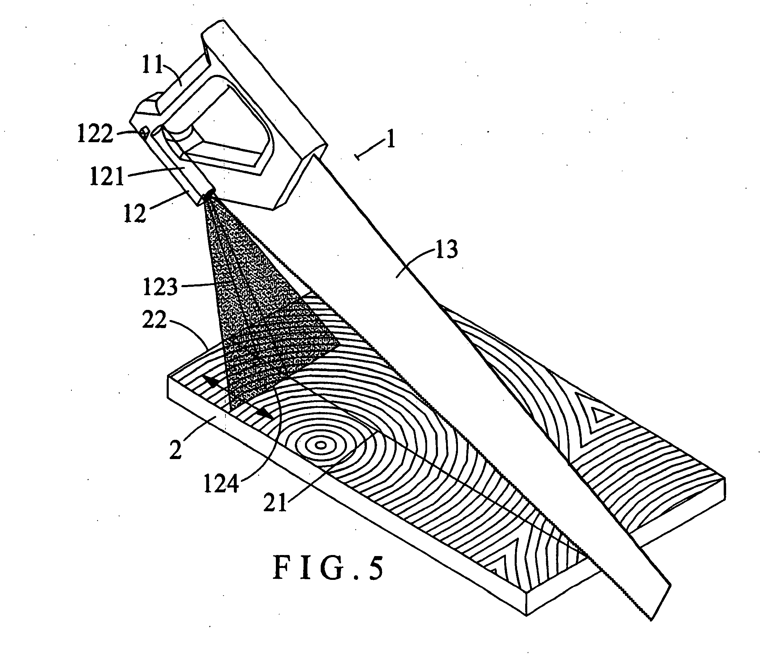

Referring to Fig. 5, showing a handsaw according to a preferred embodiment of the invention, the light emitting member 121 further produces a transverse light beam 124 moved with movement of the blade 13 and aligning with a transverse edge 22 of the workpiece 2. Preferably, the transverse light beam 124 of the light emitting member 121 is a laser light and has a planar shape. In addition, the transverse light beam 124 of the light emitting member 121 is perpendicular to the longitudinal light beam 123 of the light emitting member 121.

In practice, the transverse light beam 124 of the light emitting member 121 is aligning with the transverse edge 22 of the workpiece 2 constantly, so that the blade is kept at a vertical state relative to the workpiece 2, thereby enhancing precision of sawing the workpiece 2.

Although the invention has been explained in relation to its preferred embodiment as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A handsaw (1) comprising:
a handle (11);
a blade (13) mounted on the handle (11); and
a light emitting member (121) mounted on the handle (11) to produce a longitudinal light beam (123) aligning with a cutting edge (131) of the blade (13) and extending from the cutting edge (131) of the blade (13) to a workpiece, wherein the longitudinal light beam (123) of the light emitting member (121) is a laser light and has a planar shape, further comprising a chamber (12) mounted on a side of the handle (11) and the light emitting member (121) being mounted in the chamber (12),
the longitudinal light beam (123) of the light emitting member (121) projecting onto a surface of a workpiece (2) to align with a sawing line (21) of the workpiece (2), so that the sawing line (21) of the workpiece (2) and the longitudinal light beam (123) of the light emitting member (121) are directed in the same direction, **characterized in that** the light emitting member (121) further produces a transverse light beam (124) moving with the blade (13) and aligning with a transverse edge (22) of a workpiece (2).

2. The handsaw in accordance with claim 1, wherein the transverse light beam (124) of the light emitting member (121) is a laser light.

3. The handsaw in accordance with claim 1, wherein the transverse light beam (124) of the light emitting member (121) has a planar shape.

4. The handsaw in accordance with claim 1, wherein the transverse light beam (124) of the light emitting member (121) is perpendicular to the longitudinal light beam (123) of the light emitting member (121).

## Patentansprüche

1. Handsäge (1) umfassend:
einen Handgriff (11),
ein mit dem Handgriff (11) verbundenes Sägeblatt (13) und
ein an dem Handgriff angeordnetes, Licht emittierendes Element (121) zum Erzeugen eines mit einer Schneidkante (131) des Sägeblattes übereinstimmenden und von der Schneidkante (131) des Sägeblattes (13) auf ein Werkstück längsgerichteten Lichtstrahls (123), wobei der längsgerichtete Lichtstrahl (123) des Licht emittierenden Elementes (121) ein planar ausgerichtetes Laserlicht ist,
ferner umfassend eine an einer Seite des Handgriffs (11) befestigte Kammer (12) und das in der Kammer (12) aufgenommene Licht emittierende Element (121),
den sich auf einer Fläche eines Werkstückes (2) mit einer Sägelinie (21) auf dem Werkzeug (2) deckenden, längsgerichteten Lichtstrahl (123) des Licht emittierenden Elements (121), so dass die Sägelinie (21) des Werkstückes (2) und
der längsgerichtete Lichtstrahl (123) des Licht emittierenden Elements (121) in die gleiche Richtung weisen,
**dadurch gekennzeichnet,**
**dass** das Licht emittierende Element (121) ferner einen sich quer ausbreitenden Lichtstahl (124) erzeugt, der sich mit dem Sägeblatt (13) bewegt und parallel zu einer quer verlaufenden Kante (22) des Werkstückes (2) ausgerichtet ist.

2. Handsäge nach Anspruch 1,
**dadurch gekennzeichnet,**
**dass** der sich quer ausbreitende Lichtstrahl (124) des Licht emittierenden Elements (121) ein Laserlicht ist.

3. Handsäge nach Anspruch 1,
**dadurch gekennzeichnet,**
**dass** der sich quer ausbreitende Lichtstrahl (124) des Licht emittierenden Elements (121) planar ausgerichtet ist.

4. Handsäge nach Anspruch 1,
**dadurch gekennzeichnet,**
**dass** der sich quer ausbreitende Lichtstrahl (124) des Licht emittierenden Elements (121) lotrecht zum längsgerichteten Lichtstrahl (123) des Licht emittierenden Elements (121) ist.

## Revendications

1. - Scie à main (1) comprenant :
- une poignée (11) :
- une lame (13) montée sur la poignée (11) ; et
- un élément (121) émettant de la lumière monté sur la poignée (11) pour produire un faisceau de lumière longitudinal (123) s'alignant avec une arête de coupe (131) de la lame (13) et s'étendant à partir de l'arête de coupe (131) de la lame (13) jusqu'à une pièce à usiner, le faisceau de lumière longitudinal (123) de l'élément émettant de la lumière (121) étant une lumière laser et ayant une forme plane, comprenant en outre une chambre (12) montée sur un côté de la poignée (11) et l'élément émettant de la lumière (121) étant monté dans la chambre (12),
le faisceau de lumière longitudinal (123) de l'élément émettant de la lumière (121) se projetant sur une surface d'une pièce à usiner (2) pour s'aligner avec une ligne de sciage (21) de la pièce à usiner (2), de telle sorte que la ligne de sciage (21) de la pièce à usiner (2) et le faisceau de lumière longitudinal (123) de l'élément émettant de la lumière (121) sont dirigés dans la même direction, **caractérisée par le fait que** l'élément émettant de la lumière (121) produit en outre un faisceau de lumière transversal (124) se déplaçant avec la lame (13) et s'alignant avec un bord transversal (22) d'une pièce à usiner (2).

2. - Scie à main selon la revendication 1, dans laquelle le faisceau de lumière transversal (124) de l'élément émettant de la lumière (121) est une lumière laser.

3. - Scie à main selon la revendication 1, dans laquelle le faisceau de lumière transversal (124) de l'élément émettant de la lumière (121) a une forme plane.

4. - Scie à main selon la revendication 1, dans laquelle le faisceau de lumière transversal (124) de l'élément émettant de la lumière (121) est perpendiculaire au faisceau de lumière longitudinal (123) de l'élément émettant de la lumière (121).
